# FASCICULE DE BREVET EUROPEEN

(11) **EP 2 191 964 B1**
(45) Date de publication et mention de la délivrance du brevet: **05.12.2018**
(21) Numéro de dépôt: 09177494.3
(22) Date de dépôt: 30.11.2009
(51) Int. Cl.: B32B 27/12, B32B 27/18, B32B 27/40, D06N 3/00, D06N 3/14, D06M 11/45, D06M 11/68, D06M 15/564, E04D 5/10

(54) **Textile souple pour la réalisation de zones coupe-feu**
Flexibles Textilmaterial für Brandschutztbereiche
Flexible textile for fire barrier regions

(30) Priorité: 28.11.2008 FR 0858137
(43) Date de publication de la demande: 02.06.2010
(73) Titulaire: Porcher Industries, 38300 Badinières (FR)
(72) Inventeur: Veran, Stéphane, 73100, AIX LES BAINS (FR); Merle, Grégory, 38110, CESSIEU (FR)
(74) Mandataire: Lavoix

(56) Documents cités:
- WO-A1-00/23492
- WO-A1-2005/058599
- DE-A1- 19 609 311
- DATABASE WPI Week 200580 Thomson Scientific, London, GB; AN 2005-781970 XP2535692 & JP 2005 305778 A (HIRAOKA SHOKUSEN KK) 4 novembre 2005 (2005-11-04)
- DATABASE WPI Week 200252 Thomson Scientific, London, GB; AN 2002-483908 XP002567318 & JP 2002 121378 A (NIKKA KAGAKU KK) 23 avril 2002 (2002-04-23)
- DATABASE WPI Week 200172 Thomson Scientific, London, GB; AN 2001-621571 XP002535693 & JP 2001 240648 A (SEKISUI CHEM IND CO LTD) 4 septembre 2001 (2001-09-04)

## Description

La présente invention concerne des textiles destinés à être utilisés dans le bâtiment, et plus particulièrement pour la création de zones coupe-feu sur les toitures, par exemple autour des lanterneaux.

Classiquement des textiles de verre étaient utilisés, lesdits textiles étant collés sur les membranes qui constituent le revêtement de toit, ces membranes étant le plus souvent en polychlorure de vinyle (PVC).

Ces textiles doivent être ignifugés en raison de la réglementation en vigueur et de leur situation car les zones dans lesquelles ils sont appliqués peuvent être à l'origine de la propagation d'un éventuel feu par la toiture.

Par exemple en Europe ils doivent être classés M0.

Les tissus traditionnellement utilisés étaient fixés par collage sur la membrane constituant le revêtement de toit avec l'apport d'une colle.

Des évolutions de ces produits ont été proposées, avec des textiles préalablement enduits d'une colle thermo-fusible qui permettait de coller le tissu sur la membrane sans apport de colle et par simple chauffage, ce qui permettait de simplifier les techniques de mise en oeuvre.

En raison de la situation sur la toiture de ces textiles, il est important que les finitions soient esthétiquement satisfaisantes et fixées de façon à éviter tout décollement, une prise au vent pouvant conduire à l'arrachement desdits textiles, et tout défaut d'étanchéité.

Classiquement les textiles utilisés comportaient une face extérieure enduite en polymère à base de silicone en raison de la bonne tenue au vieillissement des silicones. Cependant, ces revêtements à base de silicone, ne permettent pas des collages efficaces et définitifs et surtout ne permettent pas le collage par thermo-soudage si il y a recouvrement au niveau des finitions.

Afin de surmonter cet inconvénient, des polyuréthannes ont également été utilisés. On connaît notamment de DE19609311 l'utilisation de polyuréthane, comprenant des groupes hydrophiles, en phase aqueuse. Cependant, les polyuréthanes en phase aqueuse présentent des inconvénients majeurs, notamment en termes de vieillissement et ont une influence négative sur les propriétés des matériaux obtenus. Ainsi, une fois sec, un polyuréthane issu d'une phase aqueuse comporte des fonctions ioniques et/ou non ioniques hydrophiles ainsi que des résidus d'eau, ces fonctions constituant autant de point d'ancrage pour l'eau venant des conditions extérieures (humidité, conditions météorologiques, etc.) et sont ainsi source de dégradations du polyuréthanne.

On connaît également, de JP20040124617, des compositions comprenant une résine polyuréthanne aliphatique ayant une liaison carbonate, un lubrifiant et un plastifiant retardateur de flamme. Ces polyuréthannes nécessitent la présence d'un plastifiant pour pouvoir être mis en oeuvre. Le mélange du polyuréthanne à des plastifiants permet d'assouplir le polymère. Il n'existe, cependant, qu'une compatibilité partielle entre le polyuréthanne et le plastifiant (le plastifiant n'est pas un solvant du polyuréthanne). Ainsi, une fois le film formé, les plastifiants vont avoir tendance à migrer et à s'accumuler à la surface du matériau. Or les plastifiants sont des produits gras qui en s'accumulant à la surface rendent cette dernière plus salissante. De plus, les plastifiants accumulés à la surface sont « lavés » par les intempéries ce qui provoque alors une altération des propriétés du film : il devient plus raide, plus cassant et l'ignifugation diminue. Afin de ralentir ces phénomènes un top-coat acrylique ou vernis polyuréthanne est alors nécessaire. Les compositions obtenues ne sont pas thermosoudables. Leur mise en oeuvre nécessite des soudures par haute fréquence. Pour la soudure haute fréquence, contrairement à la thermosoudure, ce n'est pas la souplesse et la température de ramollissement qui sont importantes, mais la masse du polyuréthanne. Les masses de composition engagées conduisent à des revêtements lourds.

Pour fixer définitivement ces raccords, il est également possible d'effectuer des fixations mécaniques, par exemple par rivetage, qui ne sont pas satisfaisantes esthétiquement, ou d'utiliser des colles spéciales qui compliquent les techniques de pose et contraignent à l'utilisation d'outils susceptibles par ailleurs de dégrader les membranes.

En outre ces textiles doivent présenter des propriétés de résistance au feu et les additifs couramment utilisés comportent des sels d'antimoine associés à des composés halogénés. D'une part, l'antimoine peut comporter des traces de métaux lourds comme le plomb, et le trioxyde d'antimoine est classé dans la catégorie 3 comme substance préoccupante pour l'homme en raison d'effets cancérigènes possibles en Europe (JOCE, 1994). D'autre part, les dérivés halogénés comme les polybromobiphényles ou diphényléthers polybromés sont classés CMR (cancérigène mutagène reprotoxique) et visés par la législation européenne RoHS (2002/95/CE).

Un textile susceptible d'être utilisé dans les zones coupe-feu pour qu'il ne présente plus les problèmes posés par les produits existants, devrait présenter les propriétés suivantes :
- permettre un assemblage par thermo-soudage du textile à la fois avec les membranes de revêtement de toit et avec le textile lui-même dans les zones de recouvrement,
- présenter une résistance au vieillissement satisfaisante tant en terme d'aspect esthétique que de propriétés mécaniques,
- ses propriétés de résistance au feu ne devraient pas être conférées ni par des sels d'antimoine ni par des dérivés halogénés,
- présenter une résistance à l'eau satisfaisante pour garantir la stabilité du collage à l'hydrolyse.

La présente invention, permet de résoudre l'ensemble de ces problèmes, et répond au cahier des charges tant en terme de vieillissement qu'en terme de collage par thermo-soudage.

L'invention concerne un textile souple enduit, thermocollant, caractérisé en ce qu'il consiste en une trame textile en fils de verre enduite sur ses deux faces par un matériau polymérique ayant une plage de ramollissement comprise entre 100° C et 250° C, ledit matériau polymérique étant enduit à un poids compris entre 12 et 25 g/m² par face et comprenant :
- d'une part, un polyuréthanne ne comportant pas de fonction ionique, et, d'autre part,
- un ignifugeant constitué par un composé phosphoré, et/ou
- une charge minérale choisie parmi les sels de zinc ou d'aluminium seuls ou en mélange.

La trame textile est enduite sur ses deux faces.

Le polyuréthanne est mis en oeuvre en phase solvant.

Le matériau polymérique est dépourvu de tensioactif, et par conséquent le matériau polymérique est dépourvu de fonctions ioniques et de fonctions non-ioniques hydrophiles.

On ne peut cependant pas exclure de l'invention un polyuréthanne comportant des fonctions non-ioniques hydrophiles lorsqu'elles sont dans des proportions faibles, notamment traces, telles qu'elles ne rendent pas le matériau polymérique hydrophile et n'entraînent pas la formation de point d'ancrage pour l'eau et donc la détérioration du matériau polymérique.

Le matériau polymérique est dépourvu de lubrifiant ou plastifiant.

De préférence, le matériau polymérique comprend un ignifugeant constitué par un composé phosphoré et une charge minérale choisie parmi les sels de zinc ou d'aluminium seuls ou en mélange.

Dans un mode de réalisation, la plage de ramollissement est comprise entre 150° C et 250° C.

La plage de ramollissement est mesurée selon la méthode du Banc Kofler.

Le polyuréthanne est choisi parmi les polyuréthannes ayant une tg inférieure à 25° C, notamment inférieure à 0° C, de préférence inférieure à -20° C, mieux inférieure à -25°C, en particulier inférieure à -30°C et mieux encore inférieure à -35°C.

La tg (température de transition vitreuse) est mesurée par analyse calorimétrique différentielle (Differential Scanning Calorimetry ou DSC), par exemple à l'aide de l'appareil Mettler Toledo DCS823E.

Le polyuréthanne peut être linéaire ou ramifié.

L'homme du métier, de part ses connaissances générales, pourra déterminer le polyuréthanne répondant aux caractéristiques de la présente invention, notamment ayant une plage de ramollissement comprise entre 100 °C et 250 °C.

Le polyuréthanne est appliqué en phase solvant. Les solvants utilisés sont choisis parmi les alcools et les solvants aromatiques seuls ou en mélange, par exemple l'isopropanol et/ou le toluène. Le polyuréthane ne comporte pas de tensioactif.

Dans un mode de réalisation, le polyuréthanne est appliqué par une technique d'enduction à chaud dite technique « hot melt ».

Les techniques d'enduction sous forme d'émulsion de polyuréthanne ne permettent pas de répondre au cahier des charges en termes de résistance du collage à l'hydrolyse. En effet, ces formulations contiennent nécessairement des polyuréthannes comprenant des fonctions ioniques ou de nombreuses fonctions hydrophiles qui après enduction peuvent avoir une influence négative sur la propriété d'hydrofugation recherchée. Ainsi, une fois sec, un polyuréthane issu d'une phase aqueuse comporte de nombreuses fonctions ioniques et/ou non ioniques hydrophiles ainsi que des résidus d'eau. Ces fonctions constituant autant de point d'ancrage pour l'eau venant des conditions extérieures (humidité, conditions météorologiques, etc.), ce qui est responsable d'une dégradation du revêtement polymérique. Le polyuréthanne de la présente invention, qui se trouve en phase solvant, une fois sec, ne comporte pas d'eau résiduelle ni de fonctions ioniques et de fonctions hydrophiles. On ne peut cependant pas exclure de l'invention un polyuréthanne comportant des fonctions non-ioniques hydrophiles lorsqu'elles sont dans des proportions faibles, notamment traces, telles qu'elles ne rendent pas le matériau polymérique hydrophile et n'entraînent pas la formation de point d'ancrage pour l'eau et donc la déterioration du matériau polymérique.

L'ignifugeant est constitué par un composé phosphoré, choisi parmi les composés phosphore azote, les phosphinates métalliques, les phosphates esters et les phosphates de bore seuls ou en mélange.

Dans un mode de réalisation, le composé phosphoré est choisi dans le groupe constitué par le polyphosphate d'ammonium, le phosphinate métallique de formule [R₁R₂PO₂]ₙ⁻Mn⁺ (Pekoflam STC), le phosphore polyol (exolit OP550) ou le phosphate de bore (budit 326).

La charge minérale est choisie dans le groupe constitué par le borate de zinc, l'hydroxystannate de zinc, le trihydrate d'alumine.

Le textile est constitué par des fils en verre, lesdits fils étant tissés ou non tissés.

Le textile est constitué par des fils en verre.

L'enduction est effectuée par les techniques classiquement utilisées dans l'enduction des textiles comme l'enduction directe ou l'enduction par transfert.

On entend par enduction directe une enduction par dépose directe à l'aide d'une racle ou d'un cylindre ou par lame d'air, à la barre meyer (ou procédé champion), voire par enduction rideau ou enduction par transfert de film ou « film press », sur le support du matériau polymérique à l'état de solution en phase solvant ou en fusion.

On entend par enduction par transfert une enduction par dépôt du matériau polymérique sur un papier transfert revêtu par des silicones, du polypropylène ou du PTFE à l'aide d'une racle ou d'un cylindre, puis transfert par déroulage sur le textile.

Dans un mode de réalisation, l'enduction ne peut être effectuée sur les deux faces du textile en une seule opération.

Dans un mode de réalisation, une enduction est effectuée par extrusion de la couche de polyuréthanne sur le verre.

Dans un mode de réalisation, un film PU constitué d'une mince couche de polyuréthanne ignifugé est contre-collé sur chacune des faces du textile par fusion hot melt par lamination/calandrage.

L'enduction est réalisée à un poids compris entre 12 et 25 g/m² par face.

Dans un mode de réalisation, l'enduction peut être pigmentée, sur l'une des faces ou sur les deux, cette pigmentation étant effectuée par ajout d'une charge dite pigmentaire dans le matériau polymérique.

Le ratio entre la charge minérale et l'ignifugeant phosphoré varie de 0 (pas de charge minérale) à 2 (deux fois plus de charge minérale par rapport à l'ignifugeant phosphoré).

Dans un mode de réalisation, la teneur en ignifugeant phosphoré et/ou charge minérale (soit les charges) par rapport au polyuréthanne sec est comprise entre 3 et 400 parts de charge(s) et/ou ignifugeant pour 100 parts de PU sec, de préférence entre 20 et 150 parts de charge(s) et/ou ignifugeant pour 100 parts du PU sec.

Le textile selon l'invention est souple, c'est-à-dire qu'il présente des propriétés de conformabilité.

Le terme souple, désignant le textile selon l'invention, signifie qu'il est possible d'enrouler ce dernier selon un rayon de courbure relativement faible de l'ordre du cm.

L'invention concerne également l'utilisation d'un textile selon l'invention pour la réalisation d'une zone coupe-feu sur les toitures.

Elle concerne également une méthode d'ignifugation des toitures dans les zones proximales des lanterneaux comprenant les étapes de :
- on dispose d'un textile selon l'invention,
- on applique ledit textile dans la zone à ignifuger,
- on colle par chauffage le textile sur la toiture,
- on effectue la finition en collant par chauffage un rabat ou une bande/pièce dudit textile sur le textile lui-même.

L'invention concerne également un procédé de fabrication d'un textile enduit, souple, thermocollant sur ses deux faces par un matériau polymérique, caractérisé en ce que :
- on dispose d'un matériau polymérique ayant une plage de ramollissement comprise entre 100° C et 250° C, comprenant, d'une part, un polyuréthane ne comportant pas de fonction ionique et, d'autre part, un ignifugeant constitué par un composé phosphoré, et/ou une charge minérale choisie parmi les sels de zinc ou d'aluminium seuls ou en mélange,
- on dispose d'un textile en fils de verre,
- on dépose le matériau polymérique par enduction, extrusion ou lamination sur le textile à un poids compris entre 12 et 25 g/m² par face.

Dans un mode de réalisation, la dépose du matériau polymérique sur le textile est effectuée simultanément sur les deux faces du textile.

Dans un autre mode de réalisation, on effectue une étape de séchage pour éliminer le solvant, ledit séchage étant effectué par passage dans un four.

Les différents éléments entrant dans la composition ou la réalisation du textile et de son enduction ont été décrits plus haut et constituent autant de caractéristiques du procédé de fabrication selon l'invention. De même, le textile souple enduit selon l'invention peut être aussi défini par son procédé de fabrication tel qu'il vient d'être décrit.

### Exemples :

### Formulations :

| Essai | polyuréthanne | Ignifugeant | charge minérale |
|---|---|---|---|
| A | 85% | 15% | 0% |
| B | 75% | 15% | 10% |
| C | 75% | 0% | 25% |

Le polyuréthanne utilisé est le produit ICAFLEX NE128, commercialisé par la société ICAP SIRA. L'ignifugeant est du polyphosphate d'ammonium, commercialisé par la société CLARIANT sous la dénomination EXOLIT AP 422.

La charge minérale est du trihydrate d'alumine commercialisé par la société ALCAN sous la dénomination SAFIC ALCAN SF₄.

Les pourcentages sont donnés pour des matières commerciales.

La viscosité des formulations peut être ajustée par l'ajout de solvants adéquats. Une coloration grise peut par exemple être obtenue par l'ajout de poudre aluminium à hauteur de 3% de la formule totale (Multimet 1000 LP).

### Enduction :

Enduction racle en l'air sur tissu de verre 397 g/m². Séchage 1 minute 110° C.

### Conditions de contre-collage et de tests :

### Les substrats utilisés sont une membrane PVC et le tissu enduit apposé sur lui-même.

Les contre-collages sur cette membrane PVC et sur le tissu enduit lui-même sont réalisés sous presse à 160° C pendant 1 minute et sous 30 bars.

La force de pelage est mesurée en délaminant des bandes de 5 cm de large sur un dynamomètre.

Le test de vieillissement est réalisé en plaçant l'assemblage tissu / membrane PVC dans de l'eau à 80° C.

Les poids d'enduction déposés en produit sec sont inférieurs à 10%.

Un résultat M1 sur le banc de test au feu est interprété comme M0.

### Résultats :

| Essai | Poids d'enduction sec (face 1 / face 2) | Force de pelage sur membrane PVC à neuf | Force de pelage sur membrane PVC vieillissement 7 jours | Force de pelage tissu sur tissu à neuf | Classement feu |
|---|---|---|---|---|---|
| A | 15/16 g/m² | 47 N | 43 N | 6 N | M1 |
| B | 18-19 g/m² | 58 N | indécollable | 5 N | M1 |
| C | 15-15 g/m² | 65 N | 28 N | 6,5 N | M1 |

Une chute de l'ordre de 50% de la force de pelage suite au vieillissement est acceptable. De même, les forces mesurées tissu sur tissu sont suffisantes pour l'application visée.

### Contre-exemple : Enduction avec polyuréthane aqueux ignifugé

### Formulation :

La composition comprend :
- polyuréthanne aqueux (Lamberti Roflex SG) : 51,5%,
- ignifugeant de type composé phosphoré (Lamberti Pyroflam MP) : 48,4%, et
- un épaississant (Lanbicol LAN) : 0,1%.

### Enduction :

Enduction racle en l'air sur tissu de verre 397 g/m². Séchage 1 minute 110° C. Le poids d'enduction obtenu est de 25g/m² sur chaque face.

### Résultats :

Les conditions de contre collage et de test sont telles que précisées ci-dessus

| Essai | Poids d'enduction sec (face 1 / face 2) | Force de pelage sur membrane PVC à neuf | Force de pelage sur membrane PVC vieillissement 7 jours | Collage tissu sur tissu | Classement feu |
|---|---|---|---|---|---|
| D | 25 g/m² | 64 N | 7,2 N | 37N | M1 |

Les résultats montrent une perte de plus de 50% de force de pelage au bout de 7 jours. Les résultats montrent également qu'au bout de 20 jours le tissu obtenu avec une enduction en phase aqueuse est décollé de la membrane alors que les tissus obtenus avec une enduction en phase solvant sont encore bien collés.

## Revendications

1. Textile souple enduit, thermocollant, pour la réalisation d'une zone coupe-feu sur les toitures, **caractérisé en ce qu'**il consiste en une trame textile en fils de verre enduite sur ses deux faces par un matériau polymérique ayant une plage de ramollissement, mesurée par la méthode du banc Kofler, comprise entre 100° C et 250° C, ledit matériau polymérique étant enduit à un poids compris entre 12 et 25 g/m² par face et comprenant :
- d'une part, un polyuréthanne préparé et mis en oeuvre en phase solvant et ne comportant pas de fonction ionique, et, d'autre part,
- un ignifugeant constitué par un composé phosphoré, et/ou
- une charge minérale choisie parmi les sels de zinc ou d'aluminium seuls ou en mélange.

2. Textile selon la revendication 1, **caractérisé en ce que** le polyuréthanne est choisi parmi les polyuréthannes ayant une tg, mesurée par analyse calorimétrique différentielle, inférieure à 25° C, notamment inférieure à 0° C, de préférence inférieure à -20° C, mieux inférieure à -25°C, en particulier inférieure à -30°C et mieux encore inférieure à -35°C.

3. Textile selon l'une des revendications 1 ou 2, **caractérisé en ce que** le composé phosphoré est choisi parmi les composés phosphore azote, les phosphinates métalliques, les phosphates esters et les phosphates de bore.

4. Textile selon la revendication 3, **caractérisé en ce que** le composé phosphoré est choisi dans le groupe constitué par le polyphosphate d'ammonium, le phosphinate métallique de formule [R₁R₂PO₂]ₙ⁻Mn⁺, le phosphore polyol ou le phosphate de bore.

5. Textile selon l'une des revendications précédentes, **caractérisé en ce que** la charge minérale est choisie dans le groupe constitué par le borate de zinc, l'hydroxystannate de zinc, le trihydrate d'alumine.

6. Textile selon l'une des revendications précédentes, **caractérisé en ce que** le textile est constitué par des fils en verre, lesdits fils étant tissés ou non tissés.

7. Textile selon l'une des revendications précédentes, **caractérisé en ce que** le ratio entre la charge minérale et l'ignifugeant est compris entre 0 et 2.

8. Textile selon l'une des revendications précédentes, **caractérisé en ce que** la teneur en charge(s) minérale(s) et/ou ignifugeant par rapport au polyuréthanne sec est comprise entre 3 et 400 parts de charge(s) et/ou ignifugeant pour 100 parts de PU sec.

9. Utilisation d'un textile selon l'une quelconque des revendications 1 à 8 pour la réalisation d'une zone coupe-feu sur les toitures.

10. Méthode d'ignifugation des toitures dans les zones proximales des lanterneaux comprenant les étapes de :
- on dispose d'un textile selon l'une des revendications 1 à 8,
- on applique ledit textile dans la zone à ignifuger,
- on colle par chauffage le textile sur la toiture,
- on effectue la finition en collant par chauffage un rabat ou une bande/pièce dudit textile sur le textile lui-même.

11. Procédé de fabrication d'un textile enduit, souple, thermocollant sur ses deux faces par un matériau polymérique, **caractérisé en ce que** le procédé consiste dans les étapes suivantes :
- on dispose d'un matériau polymérique ayant une plage de ramollissement comprise entre 100° C et 250° C, comprenant, d'une part, un polyuréthanne préparé en phase solvant et ne comportant pas de fonction ionique, et, d'autre part, un ignifugeant constitué par un composé phosphoré, et/ou une charge minérale choisie parmi les sels de zinc ou d'aluminium seuls ou en mélange,
- on dispose d'un textile en fils de verre,
- on dépose le matériau polymérique par enduction, extrusion ou lamination sur le textile à un poids compris entre 12 et 25 g/m² par face.

12. Procédé selon la revendication 11, **caractérisé en ce que** la dépose du matériau polymérique sur le textile est effectuée simultanément sur les deux faces.

13. Procédé selon l'une quelconque des revendications 11 ou 12, **caractérisé en ce que** la dépose du matériau polymérique est effectuée par enduction en phase solvant et comprend en outre une étape de séchage.

## Patentansprüche

1. Beschichtetes, flexibles, heißklebendes Textil für die Herstellung einer Brandschutzzone auf Dächern, **dadurch gekennzeichnet, dass** sie aus einer Textilgrundlage aus Glasfäden, die auf ihren beiden Seiten mit einem Polymermaterial beschichtet ist, das einen Erweichungsbereich, gemessen mit dem Verfahren der Kofler-Bank, zwischen 100°C und 200°C aufweist, wobei das Polymermaterial bei einem Gewicht beschichtet ist, das zwischen 12 und 25 g/m² pro Seite liegt, und umfasst:
- einerseits ein Polyurethan, das in einer Lösungsmittelphase aufbereitet und hergestellt ist und keine ionische Funktion aufweist, und andererseits
- ein flammenhemmendes Mittel, das aus einer Phosphorverbindung gebildet ist, und/oder
- einen mineralischen Füllstoff, der ausgewählt ist aus Zinksalzen oder Aluminium allein oder in einer Mischung.

2. Textil nach Anspruch 1, **dadurch gekennzeichnet, dass** das Polyurethan ausgewählt ist aus Polyurethanen, die eine Glasübergangstemperatur, gemessen durch Differentialabtastkalorimetrie, kleiner als 25°C, insbesondere kleiner als 0°C, vorzugsweise kleiner als -20°C, besser kleiner als -25°C, besonders kleiner als -30°C und noch besser kleiner als -35°C aufweist.

3. Textil nach einem der Ansprüche 1 oder 2, **dadurch gekennzeichnet, dass** die Phosphorverbindung ausgewählt ist aus Stickstoff-Phosphorverbindungen, Metallphosphinaten, Phosphatestern und Borphosphaten.

4. Textil nach Anspruch 3, **dadurch gekennzeichnet, dass** die Phosphorverbindung ausgewählt ist aus der Gruppe bestehend aus Ammoniumpolyphosphat, Metallphosphinat der Formel [R₁R₂PO₂]ₙ⁻Mn⁺, Phosphorpolyol oder Borphosphat.

5. Textil nach einem der vorhergehenden Ansprüche, **dadurch gekennzeichnet, dass** der mineralische Füllstoff ausgewählt ist aus der Gruppe, bestehend aus Zinkborat, Zinkhydroxystannat, Aluminiumoxidtrihydrat.

6. Textil nach einem der vorhergehenden Ansprüche, **dadurch gekennzeichnet, dass** das Textil aus Glasfäden gebildet ist, wobei die Fäden gewebt oder nicht gewebt sind.

7. Textil nach einem der vorhergehenden Ansprüche, **dadurch gekennzeichnet, dass** das Verhältnis der mineralischen Füllstoffe und des feuerhemmenden Mittels zwischen 0 und 2 liegt.

8. Textil nach einem der vorhergehenden Ansprüche, **dadurch gekennzeichnet, dass** der Gehalt an mineralischem Füllstoff und/oder feuerhemmendem Mittel in Bezug auf trockenes Polyurethan zwischen 3 und 400 Teile an Füllstoff(en) und/oder feuerhemmendem Mittel auf 100 Teile des trockenen PU liegt.

9. Verwendung eines Textils nach einem beliebigen der Ansprüche 1 bis 8 für die Herstellung einer Brandschutzzone auf Dächern.

10. Verfahren für den Brandschutz von Dächern in den Zonen nahe von Dachfenstern, umfassend die Schritte:
- Bereitstellen eines Textils nach einem der Ansprüche 1 bis 8,
- Aufbringen des Textils auf die mit Flammenschutz zu versehende Zone,
- Heißkleben des Textils auf das Dach,
- Ausführen der Fertigstellung durch Heißkleben eines Umschlags oder eines Streifens/Stücks des Textils auf dem Textil selbst.

11. Verfahren zum Herstellen eines beschichteten, weichen, auf seinen beiden Seiten durch ein Polymermaterial heißklebenden Textils, **dadurch gekennzeichnet, dass** das Verfahren aus den folgenden Schritten besteht:
- Aufbringen eines Polymermaterials, das einen Erweichungsbereich zwischen 100°C und 250°C aufweist und das einerseits ein in einer Lösungsphase hergestelltes und keine ionische Funktion aufweisendes Polyurethan und andererseits ein flammenhemmendes Mittel, das aus einer Phosphorverbindung gebildet ist, und/oder einen mineralischen Füllstoff, der aus Zinksalzen oder Aluminium allein oder in einer Mischung ausgewählt ist, enthält,
- Bereitstellen eines Textils aus Glasfäden,
- Aufbringen des Polymermaterials auf das Textil durch Beschichtung, Extrusion und Laminierung mit einem Gewicht zwischen 12 und 25 g/m² pro Seite.

12. Verfahren nach Anspruch 11, **dadurch gekennzeichnet, dass** das Aufbringen des Polymermaterials auf das Textil gleichzeitig auf beiden Seiten durchgeführt wird.

13. Verfahren nach einem beliebigen der Ansprüche 11 oder 12, **dadurch gekennzeichnet, dass** das Aufbringen des Polymermaterials durch Beschichtung in einer Lösungsmittelphase durchgeführt wird und außerdem einen Trockenschritt umfasst.

## Claims

1. Heat-sealing coated flexible textile, for producing a fire barrier zone on roofs, **characterized in that** it consists of a glass-fibre textile mesh coated on its two faces with a polymeric material having a softening range, measured by the Kofler bench method, of between 100°C and 250°C, said polymeric material being coated at a weight of between 12 and 25 g/m² per face and comprising:
- firstly, a polyurethane prepared and used in the solvent phase and not comprising an ionic function, and secondly,
- a fire retardant consisting of a phosphorus-containing compound, and/or
- a mineral filler chosen from zinc salts or aluminium salts, alone or as a mixture.

2. Textile according to Claim 1, **characterized in that** the polyurethane is chosen from polyurethanes having a tg, measured by differential scanning calorimetry, below 25°C, in particular below 0°C, preferably below -20°C, better still below -25°C, in particular below -30°C and even better still below -35°C.

3. Textile according to either of Claims 1 and 2, **characterized in that** the phosphorus-containing compound is chosen from phosphorus-nitrogen compounds, metal phosphinates, phosphate esters and boron phosphates.

4. Textile according to Claim 3, **characterized in that** the phosphorus-containing compound is chosen from the group consisting of ammonium polyphosphate, the metal phosphinate of formula [R₁R₂PO₂]ₙ⁻Mn⁺, phosphorus polyol or boron phosphate.

5. Textile according to one of the preceding claims, **characterized in that** the mineral filler is chosen from the group consisting of zinc borate, zinc hydroxystannate and alumina trihydrate.

6. Textile according to one of the preceding claims, **characterized in that** the textile consists of glass threads, said threads being woven or nonwoven.

7. Textile according to one of the preceding claims, **characterized in that** the ratio between the mineral filler and the fire retardant is between 0 and 2.

8. Textile according to one of the preceding claims, **characterized in that** the content of mineral filler (5) and/or fire retardant relative to the dry polyurethane is between 3 and 400 parts of filler(s) and/or fire retardant per 100 parts of dry PU.

9. Use of a textile according to any one of Claims 1 to 8, for producing a fire barrier zone on roofs.

10. Method for fire-proofing roofs in proximal zones of skylights, comprising the steps of:
- providing a textile according to one of Claims 1 to 8,
- applying said textile in the zone to be fire proofed,
- heat-bonding the textile onto the roof,
- finishing by heat-bonding a flap or a strip/piece of said textile onto the textile itself.

11. Method for manufacturing a heat-sealing flexible textile coated on its two faces with a polymeric material, **characterized in that** the process consists of the following steps:
- providing a polymeric material having a softening range of between 100°C and 250°C, comprising, firstly, a polyurethane prepared in the solvent-phase and not comprising an ionic function, and secondly, a fire retardant consisting of a phosphorus-containing compound, and/or a mineral filler chosen from zinc salts or aluminium salts, alone or as a mixture,
- providing a glass fibre textile,
- depositing the polymeric material, by coating, extrusion or lamination, on the textile at a weight of between 12 and 25 g/m² per face.

12. Process according to Claim 11, **characterized in that** the depositing of the polymeric material on the textile is carried out simultaneously on the two faces.

13. Process according to either one of Claims 11 and 12, **characterized in that** the depositing of the polymeric material is carried out by solvent-phase coating and also comprises a drying step.
